# EUROPÄISCHE PATENTSCHRIFT

(11) **EP 1 504 684 B1**
(45) Veröffentlichungstag und Bekanntmachung des Hinweises auf die Patenterteilung: **24.05.2006**
(21) Anmeldenummer: 04016182.0
(22) Anmeldetag: 09.07.2004
(51) Int. Cl.: A24D 3/02

(54) **Verfahren und Vorrichtung zur Herstellung eines Filterstabs**
Method and device for producing a filter rod
Procédé et dispositif pour la production d'une tige de filtre

(30) Priorität: 08.08.2003 EP 03018111
(43) Veröffentlichungstag der Anmeldung: 09.02.2005
(73) Patentinhaber: Hauni Maschinenbau AG, 21033 Hamburg (DE)
(72) Erfinder: Buhl, Alexander, 23974 Robertsdorf (DE); Horn, Sönke, 21502 Geesthacht (DE); Maurer, Irene, 21035 Hamburg (DE); Peisker, Jan, 21516 Schulendorf (DE); Scherbarth, Thorsten, 21502 Geesthacht (DE); Wolff, Stephan, 21509 Glinde (DE)
(74) Vertreter: Seemann, Ralph

(56) Entgegenhaltungen:
- DE-A- 3 130 827
- GB-A- 740 735
- GB-A- 862 884

## Beschreibung

Die Erfindung betrifft ein Verfahren und eine Vorrichtung zur Herstellung eines Filterstabs der tabakverarbeitenden Industrie, wobei die gattungsgemäße Vorrichtung einen Förderer zum Fördern einer Schicht aus Filtermaterial und eine Filterstabformungsvorrichtung umfasst.

Eine entsprechende Vorrichtung und ein entsprechendes Verfahren ist beispielsweise aus der DE 31 30 807 A1 bekannt. In diesem Dokument wird ein Füllstoff für Zigarettenfilter dadurch erzeugt, dass ein Streifen oder Strom aus ununterbrochenen Fasern des Füllstoffes auf eine Stachelwalze geleitet wird, die mit einer solchen Drehzahl angetrieben wird, dass die Fasern durch die Stacheln in Stücke unregelmäßiger Länge zerrissen werden und von der Walze in willkürlicher Ausrichtung ausgegeben werden. Die zerrissenen Fasern werden auf ein Förderband aufgeschauert und einem ununterbrochenen Trägerstreifen übergeben, der aus gleichen oder verschiedenen Filterstoffen besteht. Der Trägerstreifen und der Füllstoff werden dann zu einem Filterstrang ausgeformt. Zum Ausformen des Filterstrangs wird dieser einer Strangformmaschine zugeführt, in welcher der Trägerstreifen seitlich zusammengedrückt und zu einem ununterbrochenen Strang ausgeformt wird, wobei der Filterstrang beim längsäxialen Transport desselben hergestellt wird. Anschließend, nach Herstellung des Filterstrangs wird der Filterstrang in Filterstäbe abgelängt.

Demgegenüber ist es Aufgabe der vorliegenden Erfindung, ein Verfahren und eine Vorrichtung zur effektiven Filterstabherstellung anzugeben, wobei auf möglichst wenig Raum verlässliche Filter mit homogenen Eigenschaften hergestellt werden sollen.

Gelöst wird diese Aufgabe durch ein Verfahren zur Herstellung eines Filterstabs der tabakverarbeitenden Industrie mit den folgenden Verfahrensschritten:
- Fördern wenigstens eines Filtermaterials in Form einer Schicht zu einer Filterstabformungsvorrichtung,
- Abnehmen eines länglichen Teils der Schicht, wobei die Längsachse des länglichen Teils quer zur Förderrichtung der Schicht ausgerichtet ist, und
- Formen des Filterstabs aus der Schicht bzw. dem länglichen Teil der Schicht.

Wenn insbesondere eine homogene Schicht vorgesehen ist, können durch das erfindungsgemäße Verfahren auf einfache Art und Weise homogene Filterstäbe hergestellt werden. Das Formen des Filterstabs geschieht dann aus der Schicht bzw. dem länglichen Teil der Schicht, der abgenommen wurde. Vorzugsweise hat der längliche Teil ein größeres Volumen als der Filterstab, der hergestellt wird. Das Formen kann im Rahmen der Erfindung ein Stanzen oder auch ein Prägen sein. Das Verfahren kann unter Zuhilfenahme von wenig Raum geschehen, da die Filterstäbe nicht mit der Längsachse in Förderrichtung hergestellt werden, wie dieses üblich ist, sondern quer dazu. Hierdurch kann viel Raum gespart werden.

Vorzugsweise ist die Schicht ein Vlies, wobei wenigstens eine Sorte Fasern als Filtermaterial vorgesehen ist. Durch diese erfindungsgemäße Variation kann ein Filterstab mit sehr homogenen Eigenschaften hergestellt werden, deren Eigenschaften sehr variabel einstellbar sind.

In einer besonders bevorzugten Ausführungsform der Erfindung ist eine Sorte Fasern eine Mehrfachkomponentenfaser, insbesondere Bikomponentenfaser. Bezüglich dieser Fasern wird vollumfänglich Bezug genommen auf die europäische Patentanmeldung mit der Anmelde-Nr.: 03 004 594.2 der Anmelderin.

Wenn ein Bestandteil des Filtermaterials ein Additiv ist, können besonders gute Filtereigenschaften erzielt werden. Unter Additiv kann im Rahmen der Erfindung ein Granulat, Pulver, Extrudat, Gelkapseln, Flüssigkeiten oder Geschmacksfäden verstanden werden. Eine besonders einfache Ausgestaltung des Verfahrens ist dann möglich, wenn das Abnehmen des länglichen Teils der Schicht mittels Zusammenführen zweier Mulden und wenigstens teilweise Bewegen der Mulden in Förderrichtung der Schicht geschieht, wobei die Mulden, wenn sie zusammengeführt sind, einen Hohlraum bilden, der die Form des Filterstabs aufweist. Hierbei ist vorgesehen, dass wenigstens eine Bewegungskomponente der Mulden in Förderrichtung ausgestaltet ist und dieses zumindest kurzzeitig. Die Mulden werden außerdem aufeinander zu bewegt, insbesondere in Form zweier Kreisbahnen.

Die Schicht läuft dann in den Wirkbereich der Mulden hinein, dort wird ein länglicher Teil der Schicht abgenommen, vorzugsweise abgeschnitten bzw. abgeklemmt oder abgerissen oder abgeprägt bzw. abgestanzt. Das in den Mulden bzw. den Hohlraum, den die Mulden bilden, gelangte Material wird dann entsprechend zu einem Filterstab ausgeformt. Hierzu ist es bevorzugt, dass das Volumen des länglichen Teils der Schicht größer ist als das Volumen des Hohlraumes, das durch die beiden Mulden gebildet wird.

Vorzugsweise wird der Filterstab beim Formen erwärmt. Hierdurch ist es möglich, einen sehr homogenen Filter herzustellen, wobei eine kostengünstige und einfache Herstellung ermöglicht ist und wobei eine entsprechend hohe Variabilität gegeben ist. Die Temperatur, auf die das Filtermaterial erwärmt wird, ist vorzugsweise größer als die Schmelztemperatur der Hülle bzw. des Außenmantels der Mehrfachkomponentenfasern. Diese liegt bei einer Hülle aus beispielsweise Polyäthylen bei über 127° C. Werden Bikomponentenfasern verwendet, ist ein Kern aus Polyester bevorzugt, der eine Schmelztemperatur von 256° C hat, so dass der Faserstrang vorzugsweise auf eine Temperatur unter 256° C erwärmt wird. Vorzugsweise wird der Faserstrang in einem Temperaturbereich zwischen 127° C und 150° C erwärmt.

Vorzugsweise ist die Länge der Mehrfachkomponentenfasern zwischen 0,5 mm und 30 mm. Ferner ist die Länge der Mehrfachkomponentenfasern vorzugsweise zwischen 2 mm und 8 mm und insbesondere zwischen 3 mm und 6 mm. Die Länge sollte kürzer sein als der aus dem Filterstab herzustellende Filter, bzw. kürzer als der Filterstab selber. Durch Verwendung von Mehrfachkomponentenfasern mit einem Kern und einer Hülle unterschiedlichen Materials ist ein sehr sicherer Verbund der Fasern in den Filterstäben herstellbar. Hierzu wird der Filter bzw. das Gemisch aus Fasern, aus dem der Filter hergestellt wird, auf eine Temperatur gebracht, die etwas oberhalb des Schmelzpunktes des Hüllmaterials liegt. Auf diese Art kann ein Verkleben von Filterkomponenten ermöglicht werden.

Eine übliche Bikomponentenfaser kann von der Fa. Trevira (65926 Frankfurt, Deutschland) erworben werden. Eine zweckmäßige Bikomponentenfaser trägt die Typenbezeichnung 255, hat einen Titer von 3,0 dtex, eine Schnittlänge zwischen 3 und 6 mm, einen Kern aus PES (Chemiefaser aus Polyester) und einen Mantel bzw. eine Hülle aus Copolyethylen, wobei der Mantel bzw. die Hülle haftungserhöht modifiziert ist, d.h. mit Additiven versehen ist, die zu einer geringeren Oberflächenspannung führen.

Bei Verwendung mehrerer Filterkomponenten haften die weiteren Filterkomponenten wie beispielsweise Granulate, Pulver oder Extrudate oder andere Fasern an den Berührungspunkten mit den Mehrfachkomponentenfasern. Unter dem Begriff "Berührungspunkt" wird auch der Begriff "Kreuzungspunkt" und "Anhaftstelle" verstanden. Beim Erwärmen der Mehrfachkomponentenfasern weicht die Hülle entsprechend auf, so dass eine Haftverbindung bzw. Klebeverbindung zu weiteren Komponenten des Filters an Berührungspunkten entstehen kann. Nach Erkalten der entsprechenden Filterkomponenten wird so ein sehr formstabiler Filterstab bzw. Filter erzeugt.

Eine besonders homogene Schicht und damit ein besonders homogener Filterstab ist dann erzielbar, wenn die Schicht des Filtermaterials durch Aufschauern des Filtermaterials auf einen Förderer erzeugt wird, wobei vorzugsweise vor dem Aufschauern auf dem Förderer das Filtermaterial vereinzelt wird. Zur Vereinzelung des Filtermaterials und dem Aufschauern auf einen Förderer wird vollumfänglich auf die europäischen Patentanmeldungen mit den Anmelde-Nummern 03 007 672.3 und 03 007 675.6 der Anmelderin verwiesen. Hierzu wird eine Misch- und/oder Vereinzelungsvorrichtung verwendet, die in die genannten Patentanmeldungen die Bezeichnung "Vereinzelungsvorrichtung" erhalten hat und die Bezugsziffer 115.

Die Aufgabe wird ferner durch eine Vorrichtung zur Herstellung eines Filterstabs der tabakverarbeitenden Industrie mit einem Förderer zum Fördern einer Schicht aus Filtermaterial und einer Filterstabformungsvorrichtung gelöst, wobei die Filterstabformungsvorrichtung Mulden umfasst, deren jeweilige Längsachse quer zur Förderrichtung des Förderers ausgebildet ist. Durch die erfindungsgemäße Vorrichtung ist eine sehr platzsparende Vorrichtung zur Herstellung von Filterstäben realisierbar.

Vorzugsweise wirken jeweils zwei Mulden zusammen, um einen Hohlraum zu bilden, der die Form eines Filterstabs aufweist. In einer besonders bevorzugten Ausführungsform der erfindungsgemäßen Vorrichtung sind die Mulden halbkreisförmig ausgebildet. In diesem Fall ergeben sich im Querschnitt kreisförmige Filterstäbe. Wenn die Ränder der Mulden scharf sind, ist eine genaue Dosierung des Filtermaterials, das den Mulden zugeführt wird, möglich.

Es ist zweckmäßig, wenn die Filterstabformungsvorrichtung wenigstens eine, bevorzugt zwei, Muldenwalze und/oder wenigstens ein, bevorzugt zwei, Muldenband umfasst. Es kann auch vorgesehen sein, eine Muldenwalze und ein Muldenband vorzusehen, die zusammenwirken, um entsprechende Hohlräume für die Filterstäbe zu bilden.

Wenn die Filterstabformungsvorrichtung wenigstens teilweise erwärmbar ist, können besonders bevorzugte Filterbestandteile Verwendung finden wie Mehrfachkomponentenfasern oder Bikomponentenfasern, die vorstehend schon beschrieben wurden. Es ist vorzugsweise auch vorgesehen, dass die Filterstabformungsvorrichtung teilweise kühlbar ist, um eine Aushärtung der Filtermaterialien im Filterstab zu beschleunigen. Eine besonders einfache Ausgestaltung ist dann vorgegeben, wenn der Förderer ein Transportband ist. Das Transportband bzw. der Förderer weist vorzugsweise Öffnungen auf, um einen Unterdruck bzw. Saugluft auf die auf dem Förderer geförderte Schicht Filtermaterials auszuüben.

Es ist ferner vorzugsweise eine Misch- und/oder Vereinzelungsvorrichtung vorgesehen, mittels der Filtermaterial auf dem Förderer aufschauerbar ist. Die Misch- und/oder Vereinzelungsvorrichtung kann eine Misch- und/oder Vereinzelungsvorrichtung sein, die in den europäischen Patentanmeldungen mit den Anmelde-Nummern 03 007 675.6 und 03 007 672.3 der Anmelderin beschrieben sind. Hierzu sind vorstehend auch schon Ausführungen gemacht worden. Es wird auf diese Ausführungen vollumfänglich verwiesen.

Es ist zweckmäßig, die Filterstäbe, an deren Enden abzuschneiden, um gerade Enden bzw. glatte Enden zu erzeugen. Hierzu sind vorzugsweise Kreismesser oder ein Lasergerät mit entsprechenden Spiegeln und oder Strahlteilern vorgesehen. Es können erfindungsgemäß auch mehrere Kreismesser vorgesehen sein. Alternativ hierzu wäre es möglich, die Mulden an deren Enden verschlossen auszugestalten, so dass ein Abschneiden der Filterenden nicht notwendig ist.

Die Erfindung wird nachstehend ohne Beschränkung des allgemeinen Erfindungsgedankens anhand von Ausführungsbeispielen näher erläutert. Bezüglich aller im Text nicht näher beschriebenen Einzelheiten wird ausdrücklich auf die Zeichnungen verwiesen. Es zeigen:
- Fig. 1: eine dreidimensionale schematische Darstellung einer erfindungsgemäßen Vorrichtung, und
- Fig. 2: ein wesentlicher Teil einer erfindungsgemäßen Vorrichtung in einer anderen Ausführungsform in schematischer Darstellung.

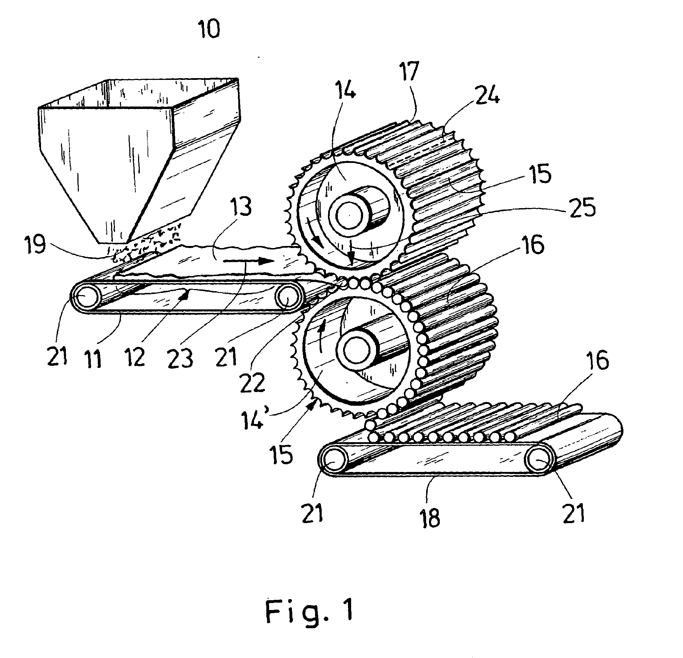

Fig. 1 zeigt eine dreidimensionale Darstellung einer erfindungsgemäßen Vorrichtung zur Herstellung eines Filterstabs der tabakverarbeitenden Industrie. Filtermaterial wird in einer Misch- und/oder Vereinzelungsvorrichtung 10 entsprechend aufbereitet. Die Misch- und/oder Vereinzelungsvorrichtung 10 ist in den vorstehend genannten europäischen Patentanmeldungen der Anmelderin näher beschrieben. Sie dient dazu, Filtermaterial in Form von Fasern zu vereinzeln und miteinander zu mischen bzw. mit Granulaten wie Aktivkohlegranulat zu mischen. Es können die verschiedensten Bestandteile Verwendung finden wie Mehrfachkomponentenfasern, insbesondere Bikomponentenfasern, die vorstehend schon genannt wurden, andere Fasern, beispielsweise aus Cellulose, Baumwolle, Hanf oder dgl., Aktivkohlegranulate oder -pulver oder andere Zusatzstoffe. Bezüglich der zu verwendenden Komponenten wird auch auf die vorstehend genannten europäischen Patentanmeldungen mit den Anmelde-Nummern 03 007 675.6, 03 007 672.3, 03 004 594.2 verwiesen. Ein bevorzugtes Gemisch aus Filtermaterialien umfasst 80 bis 95 Gew% Aktivkohlegranulat und 5 bis 20 Gew% Bikomponentenfasern der Fa. Trevira, die vorstehend schon bezeichnet wurden.
Das entsprechend vereinzelte und gemischte Filtermaterial 19 wird auf ein Förderband 11 zu einer Filtermaterialschicht 13 bzw. einem Vlies oder einem Faserkuchen 13 aufgeschauert. Auf die Filtermaterialschicht 13 wirkt ein Unterdruck 12, um das Filtermaterial schon ein wenig zu kompaktieren bzw. das Filtermaterial sicher auf dem Förderband 11 bei der Förderung zu transportieren. Die Filtermaterialschicht 13 wird in Förderrichtung 23 in Richtung eines Muldentrommelpaars in Form zweier Muldentrommeln 14 und 14' gefördert. Die Muldentrommeln sind übereinander angeordnet und drehen sich gegensinnig dergestalt, dass die zwischen die Muldentrommeln gelangende Filtermaterialschicht 13 zunächst kurzzeitig in die gleiche Richtung weitergefördert wird.

Die Filtermaterialschicht 13 gelangt in den Wirkbereich der Muldentrommeln 14 und 14', wobei durch die Kanten 17 bzw. Ränder 17 der Muldentrommel ein Filtermaterialstreifen 22 von der Filtermaterialschicht 13 abgetrennt wird und in einen sich bildenden Hohlraum von Mulden 15 der Muldentrommeln 14 und 14' gefördert zu werden. In dem Moment, in dem die zwei gegenüberliegenden Mulden 15 der jeweiligen Muldentrommeln 14, 14' genau übereinander liegen, bildet sich ein geschlossener Hohlraum, der einen kreisförmigen Querschnitt aufweist. In diesem Hohlraum bildet sich der Filterstab 16 aus.

Die Muldentrommeln 14 und 14' sind mindestens im formbildenden Bereich beheizt, um zumindest die Außenhülle des Filtermaterials, das in den Mulden angelangt ist, anzuschmelzen. Bevorzugterweise ist die Muldentrommel 14 und auch die Muldentrommel 14' luftdurchlässig und Heißluft wird durch die Muldentrommeln 14 und 14' und das Filtermaterial 19, das sich zwischen den Muldentrommeln befindet, geleitet. Hierdurch erwärmen sich die Bikomponentenfasern, so dass die Fasern miteinander und mit dem Granulat verkleben können und einen Verbund bilden.

In dem Moment, in dem die Muldentrommeln 14 und 14' sich so weit gedreht haben, dass die fertigen Filterstäbe 16 nur noch in den Mulden einer Trommel anliegen, können diese beispielsweise mit kalter Luft gekühlt werden, so dass das Aushärten der Filterstäbe 16 beschleunigt wird. Anschließend werden die fertigen Filterstäbe 16 einem Förderband 18 zugeführt und auf diesem abgefördert, um beispielsweise weiteren Verarbeitungsschritten zugeführt zu werden. Es können die Filterstäbe 16 zwischen zwei Tabakstöcke gesetzt werden, um anschließend hieraus zwei Filterzigaretten zu fertigen. Bevorzugterweise sind Messer vorgesehen, um die Enden der Filterstäbe 16 zu schneiden, so dass glatte Oberflächen dort entstehen können. Die Messer sind in den Figuren nicht dargstellt.

Die Förderbänder 11 und 18 werden über Umlenkrollen 21 umgelenkt. Die Mulden 15 der Muldentrommeln 14, 14' sind bezüglich deren Längsachse 24 queraxial zu der Förderrichtung 23 der Filtermaterialschicht 13 ausgerichtet. Durch diese Ausrichtung ist eine sehr platzsparende Vorrichtung ermöglicht. Die zwei aneinanderlaufenden Muldentrommeln 14 und 14' können auch als Prägewalzen oder Stanzwalzen benannt werden. Sofern die Filtermaterialschicht 13 relativ dick ist, und zwar dicker als der Durchmesser des Hohlraums, der sich durch zwei aneinanderliegende Mulden 15 der Muldentrommeln 14 und 14' ergibt, wird das Filtermaterial 19 in den Mulden 15 bzw. den daraus entstehenden Hohlräumen gepresst. Entsprechendes geschieht auch dann, wenn die Fördergeschwindigkeit der Filtermaterialschicht 13 etwas höher ist als die Umlaufgeschwindigkeit der Muldentrommeln 14 bzw. 14'. Die halbkreisförmigen Nuten bzw. Mulden 15 geben die Form der fertigen Filterstäbe vor. Es können auch ellipsenförmige Formen gewünscht sein. Die Mulden sind dann entsprechend ausgestaltet. Durch das erfindungsgemäße Verfahren werden aus dem Faserkuchen bzw. der Filtermaterialschicht 13 fortlaufend runde bzw. andersförmige Filterstäbe gepresst bzw. hergestellt.

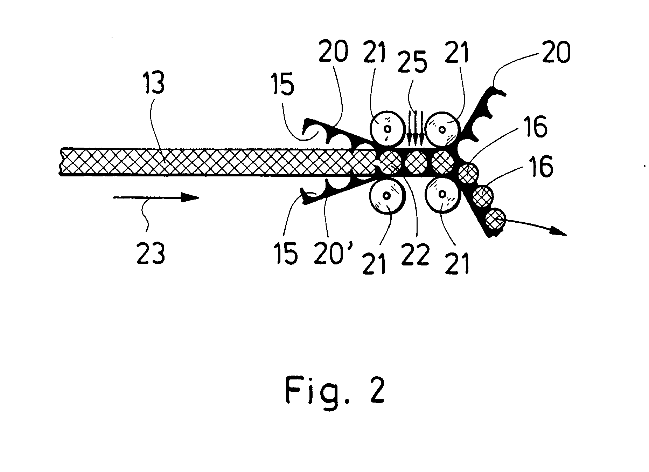

In einer anderen Ausführungsform der Erfindung, die in Fig. 2 schematisch dargestellt ist, bewegt sich die Filtermaterialschicht 13 in Förderrichtung 23 zwischen zwei Muldenbänder 20 bzw. 20', die selbst wieder Mulden 15 und Ränder 17 aufweisen, die an sich der der Muldentrommeln 14 und 14' entsprechen. Durch Verwendung von Förderbändern kann der Bereich, in dem das Filtermaterial voll von den Mulden 15 bzw. dem Material der Muldenbänder 20 und 20' umhüllt ist, verlängert oder vergrößert werden, so dass eine Beeinflussung durch Erwärmung mehr Zeit in Anspruch nehmen kann.

In Fig. 2 ist nur ein Ausschnitt dargestellt, so dass die endlosen Muldenbänder 20, 20' nur teilweise dargestellt sind. Die Muldenbänder 20 und 20' sind entsprechend auch um Umlenkrollen 21 umgelenkt. Die Funktion entspricht ansonsten in etwa derjenigen, die in Fig. 1 dargestellt ist, wobei allerdings wie erwähnt, der Bereich bzw. der Zeitraum der Beaufschlagung mit Wärme vergrößert ist. Schematisch ist in Fig. 2 auch Warmluft mit der Bezugsziffer 25 dargestellt. Um Warmluft entsprechend durch das Filtermaterial hindurchgehen zu lassen, ist es zweckmäßig, die Muldenbänder 20 und 20' luftdurchlässig auszugestalten. Entsprechendes gilt im übrigen auch für die Muldentrommeln 14 und 14' die in der Fig. 1 dargestellt sind. Auch in Fig. 1 wurde Warmluft mit der Bezugsziffer 25 schematisch dargestellt.

### Bezugszeichenliste

- 10: Misch- und/oder Vereinzelungsvorrichtung
- 11: Förderband
- 12: Unterdruck
- 13: Filtermaterialschicht
- 14, 14': Muldentrommel
- 15: Mulde
- 16: Filterstab
- 17: Rand
- 18: Förderband
- 19: Filtermaterial
- 20, 20': Muldenband
- 21: Umlenkrolle
- 22: Filtermaterialstreifen
- 23: Förderrichtung
- 24: Längsachse
- 25: warmer Luftstrom

## Patentansprüche

1. Verfahren zur Herstellung eines Filterstabs (16) der tabakverarbeitenden Industrie mit den folgenden Verfahrensschritten:
- Fördern wenigstens eines Filtermaterials (19) in Form einer Schicht (13) zu einer Filterstabformungsvorrichtung (14, 14', 20, 20'),
- Abnehmen eines länglichen Teils (22) der Schicht (13), wobei die Längsachse des länglichen Teils (22) quer zur Förderrichtung (23) der Schicht (13) ausgerichtet ist, und
- Formen des Filterstabs (16) aus der Schicht (13).

2. Verfahren nach Anspruch 1, **dadurch gekennzeichnet, dass** die Schicht (13) ein Vlies ist, wobei wenigstens eine Sorte Fasern als Filtermaterial (19) vorgesehen ist.

3. Verfahren nach Anspruch 2, **dadurch gekennzeichnet, dass** eine Sorte Fasern eine Mehrfachkomponentenfaser, insbesondere Bikomponentenfaser, ist.

4. Verfahren nach einem oder mehreren der Ansprüche 1 bis 3, **dadurch gekennzeichnet, dass** ein Bestandteil des Filtermaterials (19) ein Additiv ist.

5. Verfahren nach einem oder mehreren der Ansprüche 1 bis 4, **dadurch gekennzeichnet, dass** das Abnehmen des länglichen Teils (22) der Schicht (13) mittels Zusammenführen zweier Mulden (15) und wenigstens teilweise Bewegen der Mulden (15) in Förderrichtung (23) der Schicht (13) geschieht, wobei die Mulden (15), wenn sie zusammengeführt sind, einen Hohlraum bilden, der die Form des Filterstabs (16) aufweist.

6. Verfahren nach einem oder mehreren der Ansprüche 1 bis 5, **dadurch gekennzeichnet, dass** der Filterstab (16) beim Formen erwärmt wird.

7. Verfahren nach einem oder mehreren der Ansprüche 1 bis 6, **dadurch gekennzeichnet, dass** die Schicht (13) des Filtermaterials (19) durch Aufschauern des Filtermaterials (19) auf einen Förderer (11) erzeugt wird.

8. Verfahren nach Anspruch 7, **dadurch gekennzeichnet, dass** das Filtermaterial (19) vor dem Aufschauern auf den Förderer (11) vereinzelt wird.

9. Vorrichtung zur Herstellung eines Filterstabs (16) der tabakverarbeitenden Industrie mit einem Förderer (11) zum Fördern einer Schicht aus Filtermaterial (19) und einer Filterstabformungsvorrichtung (14, 14', 20, 20'), **dadurch gekennzeichnet, dass** die Filterstabformungsvorrichtung (14, 14', 20, 20') Mulden (15) umfasst, deren jeweilige Längsachse (24) quer zur Förderrichtung (23) des Förderers (11) ausgebildet ist.

10. Vorrichtung nach Anspruch 9, **dadurch gekennzeichnet, dass** jeweils zwei Mulden (15) zusammenwirken, um einen Hohlraum zu bilden, der die Form eines Filterstabs (16) aufweist.

11. Vorrichtung nach Anspruch 10, **dadurch gekennzeichnet, dass** die Mulden (15) halbkreisförmig sind.

12. Vorrichtung nach einem oder mehreren der Ansprüche 9 bis 11, **dadurch gekennzeichnet, dass** die Ränder (17) der Mulden (15) scharf sind.

13. Vorrichtung nach einem oder mehreren der Ansprüche 9 bis 12, **dadurch gekennzeichnet, dass** die Filterstabformungsvorrichtung (14, 14', 20, 20') wenigsten eine Muldenwalze (14, 14') und/oder wenigstens ein Muldenband (20, 20') umfasst.

14. Vorrichtung nach einem oder mehreren der Ansprüche 9 bis 13, **dadurch gekennzeichnet, dass** die Filterstabformungsvorrichtung (14, 14', 20, 20') wenigstens teilweise erwärmbar ist.

15. Vorrichtung nach einem oder mehreren der Ansprüche 9 bis 14, **dadurch gekennzeichnet, dass** der Förderer (11) ein Transportband ist.

16. Vorrichtung nach einem oder mehreren der Ansprüche 9 bis 15, **dadurch gekennzeichnet, dass** eine Misch- und/oder Vereinzelungsvorrichtung (10) vorgesehen ist, mittels der Filtermaterial (19) auf den Förderer (11) aufschauerbar ist.

## Claims

1. A process for manufacturing a filter rod (16) of the tobacco-processing industry, having the following process steps:
- conveying at least one filter material (19) in the form of a layer (13) to a filter-rod forming device (14, 14' 20, 20'),
- removing a longitudinal part (22) of the layer (13), the longitudinal axis of the longitudinal part (22) being aligned transversely to the conveying direction (23) of the layer (13), and
- forming the filter rod (16) from the layer (13).

2. A process according to Claim 1, **characterised in that** the layer (13) is a nonwoven material, with at least one type of fibre being provided as the filter material (19).

3. A process according to Claim 2, **characterised in that** one type of fibre is a multi-component fibre, particularly a bi-component fibre.

4. A process according to one or more of Claims 1 to 3, **characterised in that** a constituent of the filter material (19) is an additive.

5. A process according to one or more of Claims 1 to 4, **characterised in that** the removal of the longitudinal part (22) of the layer (13) occurs by bringing together two depressions (15) and at least partially moving the depressions (15) in the conveying direction (23) of the layer (13), the depressions (15), when they are brought together, forming a cavity which is in the shape of the filter rod (16).

6. A process according to one or more of Claims 1 to 5, **characterised in that** the filter rod (16) is heated during the forming process.

7. A process according to one or more of Claims 1 to 6, **characterised in that** the layer (13) of the filter material (19) is generated by scattering the filter material (19) onto a conveyor (11).

8. A process according to Claim 7, **characterised in that** the filter material (19) is separated before being scattered onto the conveyor (11).

9. A device for manufacturing a filter rod (16) of the tobacco-processing industry, having a conveyor (11) for conveying a layer of filter material (19) and a filter-rod forming device (14, 14', 20, 20'), **characterised in that** the filter-rod forming device (14, 14', 20, 20') comprises depressions (15) whereof the respective longitudinal axis (24) is constructed transversely to the conveying direction (23) of the conveyor (11).

10. A device according to Claim 9, **characterised in that** two depressions (15) cooperate in each case to form a cavity which is in the shape of a filter rod (16).

11. A device according to Claim 10, **characterised in that** the depressions (15) are semi-circular.

12. A device according to one or more of Claims 9 to 11, **characterised in that** the edges (17) of the depressions (15) are sharp.

13. A device according to one or more of Claims 9 to 12, **characterised in that** the filter-rod forming device (14, 14', 20, 20') comprises at least one depression roller (14, 14') and/or at least one depression belt (20, 20').

14. A device according to one or more of Claims 9 to 13, **characterised in that** the filter-rod forming device (14, 14', 20, 20') is at least partially heatable.

15. A device according to one or more of Claims 9 to 14, **characterised in that** the conveyor (11) is a conveyor belt.

16. A device according to one or more of Claims 9 to 15, **characterised in that** a mixing and/or separating device (10) is provided, by means of which the filter material (19) can be scattered onto the conveyor (11).

## Revendications

1. Procédé pour confectionner une tige de filtre (16) de l'industrie de transformation du tabac, comportant les étapes opératoires suivantes :
- transport d'au moins un matériau pour filtre (19), sous forme d'une couche (13), jusqu'à un dispositif de façonnage de tiges de filtre (14, 14', 20, 20'),
- enlèvement d'une partie allongée (22) de la couche (13), l'axe longitudinal de la partie allongée (22) étant orienté transversalement à la direction de transport (23) de la couche (13), et
- façonnage de la tige de filtre (16) dans la couche (13).

2. Procédé selon la revendication 1, **caractérisé en ce que** la couche (13) est une nappe de fibres, une variété au moins de fibres étant alors prévue comme matériau pour filtre (19).

3. Procédé selon la revendication 2, **caractérisé en ce qu'**une variété de fibres consiste en une fibre à constituants multiples, en particulier une fibre à deux constituants.

4. Procédé selon une ou plusieurs des revendications 1 à 3, **caractérisé en ce qu'**un composant du matériau pour filtre (19) est un additif.

5. Procédé selon une ou plusieurs des revendications 1 à 4, **caractérisé en ce que** l'enlèvement de la partie allongée (22) de la couche (13) se fait au moyen de la réunion de deux évidements (15) et d'un déplacement, au moins partiel, des évidements (15) dans la direction de transport (23) de la couche (13), les évidements (15), lorsqu'ils sont réunis, formant alors une cavité, qui présente la forme de la tige de filtre (16).

6. Procédé selon une ou plusieurs des revendications 1 à 5, **caractérisé en ce que** la tige de filtre (16) est échauffée lors du façonnage.

7. Procédé selon une ou plusieurs des revendications 1 à 6, **caractérisé en ce que** la couche (13) du matériau pour filtre (19) est produite par dépôt en gerbe du matériau pour filtre (19) sur un transporteur (11).

8. Procédé selon la revendication 7, **caractérisé en ce que** le matériau pour filtre (19) subit un éparpillement avant le dépôt en gerbe sur le transporteur (11). '

9. Dispositif pour confectionner une tige de filtre (16) de l'industrie de transformation du tabac, comportant un transporteur (11) destiné à transporter une couche de matériau pour filtre (19) et un dispositif de façonnage de tiges de filtre (14, 14', 20, 20'), **caractérisé en ce que** le dispositif de façonnage de tiges de filtre (14, 14', 20, 20') comprend des évidements (15), dont l'axe longitudinal respectif (24) est agencé transversalement à la direction de transport (23) du transporteur (11).

10. Dispositif selon la revendication 9, **caractérisé en ce que** deux évidements (15) coopèrent chaque fois entre eux pour former une cavité, qui présente la forme d'une tige de filtre (16).

11. Dispositif selon la revendication 10, **caractérisé en ce que** les évidements (15) sont de forme semi-circulaire.

12. Dispositif selon une ou plusieurs des revendications 9 à 11, **caractérisé en ce que** les bords (17) des évidements (15) sont acérés.

13. Dispositif selon une ou plusieurs des revendications 9 à 12, **caractérisé en ce que** le dispositif de façonnage de tiges de filtre (14, 14', 20, 20') comprend au moins un rouleau (14, 14') pourvu d'évidements et/ou au moins une bande (20, 20') pourvue d'évidements.

14. Dispositif selon une ou plusieurs des revendications 9 à 13, **caractérisé en ce que** le dispositif de façonnage de tiges de filtre (14, 14', 20, 20') peut être échauffé, au moins en partie.

15. Dispositif selon une ou plusieurs des revendications 9 à 14, **caractérisé en ce que** le transporteur (11) est une bande de transport.

16. Dispositif selon une ou plusieurs des revendications 9 à 15, **caractérisé en ce qu'**il est prévu un dispositif de mélange et/ou un dispositif d'éparpillement (10), au moyen duquel du matériau pour filtre (19) peut être déposé en gerbe sur le transporteur (11).
